# EUROPÄISCHE PATENTANMELDUNG

(11) **EP 0 968 874 A1**
(43) Veröffentlichungstag der Anmeldung: **05.01.2000**
(21) Anmeldenummer: 99111998.3
(22) Anmeldetag: 29.06.1999
(51) Int. Cl.: B60N 2/48

(54) **Verriegelungsvorrichtung und höhenverstellbar verriegelbare Kopfstütze**

(30) Priorität: 03.07.1998 DE 29811875 U
(71) Anmelder: Johnson Controls GmbH, 51399 Burscheid (DE)
(72) Erfinder: Berghaus, Udo, 42899 Remscheid (DE); Sommer, Norbert, 42929 Wermelskirchen (DE)
(74) Vertreter: Patentanwälte Dr. Solf & Zapf

(57) **Zusammenfassung**

Die Erfindung betrifft eine Verriegelungsvorrichtung, insbesondere zur höhenverstellbaren Befestigung einer Kopfstütze (10) an der Rückenlehne (11) eines Kraftfahrzeugsitzes, mit einer über eine Handhabe (9) betätigbaren Schenkelfeder (2) als Verriegelungsmittel, in welche eine Haltestange (3) koaxial einsteckbar ist, wobei ein Schenkel der Schenkelfeder (2) gestellfest gehalten und der zweite Schenkel mittels der Handhabe (9) derart verstellbar ist, daß die Schenkelfeder (2) die kraftschlüssig von ihr umgriffene Haltestange (3) zum Zwecke der axialen Verschiebung freigibt. Die Haltestange (3) ist rohrförmig ausgebildet, wobei innerhalb der rohrförmigen Haltestange (3) mindestens ein Übertragungsglied (8) zur Übertragung einer Stellkraft und Stellbewegung von der Handhabe (9) auf den verstellbaren Schenkel der Schenkelfeder (2) angeordnet ist.

## Beschreibung

Die Erfindung betrifft eine Verriegelungsvorrichtung, insbesondere zur höhenverstellbaren Befestigung einer Kopfstütze an der Rückenlehne eines Kraftfahrzeugsitzes, mit einer über eine Handhabe betätigbaren Schenkelfeder als Verriegelungsmittel, in welche eine Haltestange koaxial einsteckbar ist, wobei ein Schenkel der Schenkelfeder gestellfest gehalten und der zweite Schenkel mittels der Handhabe derart verstellbar ist, daß die Schenkelfeder die kraftschlüssig von ihr umgriffene Haltestange zum Zwecke der axialen Verschiebung freigibt. Des weiteren betrifft die Erfindung eine Kopfstütze mit einer derartigen Verriegelungsvorrichtung.

Eine bekannte Verriegelungsvorrichtung dieser Art ist Im deutschen Gebrauchsmuster DE 296 13 074 U1 offenbart. Diese bekannte Vorrichtung umfaßt als Verriegelungsmittel eine Schenkelfeder, welche innerhalb einer Führungshülse eine Haltestange der Kopfstütze derart umfaßt, daß die Windungen der Schenkelfeder im Befestigungszustand kraftschlüssig und unverschiebbar an der Mantelfläche der Haltestange anliegen. Da die Schenkelfeder zusammen mit der Haltestange in die mit dem Rahmen einer Rückenlehne fest verbundenen Führungshülse eintaucht und dort in ihrer Längsverschiebbarkeit mit Hilfe geeigneter Anschlagmittel blockiert ist, läßt sich die Haltestange nicht in ihrer Längsrichtung bewegen. Um die Haltestange zum Verstellen der Kopfstütze in ihrer Führung bewegen zu können, wird der Windungsdurchmesser der Schenkelfeder aufgeweitet. Dies geschieht in der Weise, daß durch manuelle Ausübung von Druck auf eine Handhabe der eine Schenkel der Schenkelfeder entgegengesetzt zur Wickelrichtung der Feder bewegt wird, wobei der andere Schenkel der Schenkelfeder in der Führungshülse verankert ist. Nach dem Loslassen der Handhabe umfaßt die Schenkelfeder wieder kraftschlüssig die Haltestange in ihrer Führungshülse, womit die gewünschte Position der Kopfstütze nach deren Verstellen verriegelt wird.

Ein Nachteil dieser bekannten Vorrichtung besteht darin, daß, um die Kopfstütze in eine bestimmte Gebrauchsposition einstellen zu können, zumindest mit einer Hand die Handhabe der Verriegelungseinrichtung betätigt und mit der anderen Hand die Kopfstütze verstellt werden muß. Die Handhabe befindet sich dabei im Bereich der Führungshülse, die im Gebrauchszustand in die Oberkante der Rückenlehne des Fahrzeugsitzes eingesetzt ist. Ein Verstellvorgang kann daher nur erfolgen, wenn die Person, die ihn ausführt, sich in einer der Rückenlehne etwa frontal oder seitlich zugewandten Position befindet. In sitzender Position ist keine Kopfstützenverstellung möglich.

Der Erfindung liegt die Aufgabe zugrunde, eine Verriegelungsvorrichtung der eingangs beschriebenen Art ergonomisch zu verbessern. Des weiteren zielt die Erfindung darauf ab, eine Kopfstütze mit einer Verriegelungsvorrichtung der eingangs beschriebenen Art stufenlos in eine optimale Gebrauchsposition relativ zur Position des Kopfes des Sitzbenutzers einstellen zu können, wobei die Handhabe derart leicht erreichbar angeordnet sein soll, daß die Einstellung auch im Sitzen vorgenommen werden kann.

Diese Aufgabe wird durch eine Verriegelungsvorrichtung der eingangs beschriebenen Art bzw. eine Kopfstütze mit mindestens einer solchen Verriegelungsvorrichtung gelöst, bei der die Haltestange rohrförmig ausgebildet ist, wobei innerhalb der rohrförmigen Haltestange Übertragungsglieder zur Übertragung einer Stellkraft und Stellbewegung von der Handhabe auf den verstellbaren Schenkel der Schenkelfeder angeordnet sind.

Auf diese Weise wird erfindungsgemäß eine ergonomisch verbesserte Verriegelungsvorrichtung geschaffen. Insbesondere kann die Handhabe für die erfindungsgemäße Verriegelungseinrichtung, wenn diese zur Höhenverstellung einer Kopfstütze eingesetzt werden soll, griffgünstig am Kopfstützenkörper plaziert werden, wobei die gesamte Vorrichtung einerseits in vorteilhafter Weise in die Kopfstütze integriert und andererseits leicht in der Rückenlehnenstruktur montiert werden kann.

In einer bevorzugten Ausbildung können dabei zur Übertragung der Stellkraft und Stellbewegung von der Handhabe auf den verstellbaren Schenkel der Schenkelfeder innerhalb der rohrförmigen Haltestange, koaxial zur Haltestange zwei gegenüber der Haltestange drehbewegliche Übertragungsglieder angeordnet sein, und zwar ein in Wirkverbindung mit der Handhabe stehendes kopfstützenseitiges erstes Drehelement und ein in Wirkverbindung mit dem verstellbaren Schenkel der Schenkelfeder stehendes rückenlehnenseitiges zweites Drehelement. Dadurch wird die erfindungsgemäße Verriegelungsvorrichtung leichter montierbar, insbesondere dann, wenn die beiden Übertragungsglieder über eine lösbare Verbindung, vorzugsweise über eine in axialer Richtung der Haltestange steckbare Verbindung, miteinander verbindbar sind.

Vorteilhafterweise kann dabei das erste, in Wirkverbindung mit der Handhabe stehende, kopfstützenseitige Drehelement zusammen mit der Haltestange in axialer Richtung relativ zum zweiten Drehelement im Sinne einer Teleskopierbarkeit bewegt werden, während das zweite Drehelement in seiner axialen Richtung gestellfest zur Rückenlehne angeordnet ist.

Erfindungsgemäß ist es auf einfache Weise möglich, die Handhabe in einem seitlichen oder rückwärtigen Bereich der Kopfstütze anzuordnen, wodurch mit einer Hand gleichzeitig sowohl die Verriegelungseinrichtung entriegelt als auch die Kopfstütze in eine andere Höhenposition verstellt werden kann. Diese Einstellung kann vorteilhafterweise auch im Sitzen vorgenommen werden.

Weitere vorteilhafte Ausführungen der Erfindung sind in den Unteransprüchen und der nachfolgenden speziellen Beschreibung enthalten.

Anhand zweier in der beiliegenden Zeichnung dargestellter Ausführungsbeispiele wird die Erfindung näher erläutert. Dabei zeigen:
- Fig. 1: einen Längsschnitt durch eine erste Ausführung einer erfindungsgemäßen Verriegelungsvorrichtung,
- Fig. 2: einen vertikalen Längsschnitt durch die Mitte einer erfindungsgemäßen KopfstütZe mit einer erfindungsgemäßen Verriegelungsvorrichtung gemäß Fig. 1, einschließlich einer Schnittdarstellung des oberen Teils der Rückenlehne eines Kraftfahrzeugsitzes,
- Fig. 3: einen vertikalen Längsschnitt durch die erfindungsgemäße Kopfstütze gemäß Fig. 2, jedoch im Bereich der erfindungsgemäßen Verriegelungsvorrichtung,
- Fig. 4: einen vertikalen Querschnitt durch die erfindungsgemäßen Kopfstütze entlang der Linie IV-IV in Fig. 3,
- Fig. 5: einen horizontalen Schnitt durch die erfindungsgemäßen Kopfstütze entlang der Linie V-V in Fig. 3, in vergrößerter Darstellung und geringfügig veränderter Ausführung gegenüber Fig. 3,
- Fig. 6: einen Längsschnitt durch eine zweite Ausführung einer erfindungsgemäßen Verriegelungsvorrichtung,
- Fig. 7: eine im Bereich der Schenkelfeder vergrößerte Detaildarstelltung der zweiten Ausführung einer erfindungsgemäßen Verriegelungsvorrichtung gemäß Fig. 6.

In den verschiedenen Figuren der Zeichnung sind gleiche Teile stets auch mit den gleichen Bezugszeichen versehen, so daß sie in der Regel auch jeweils nur einmal beschrieben werden.

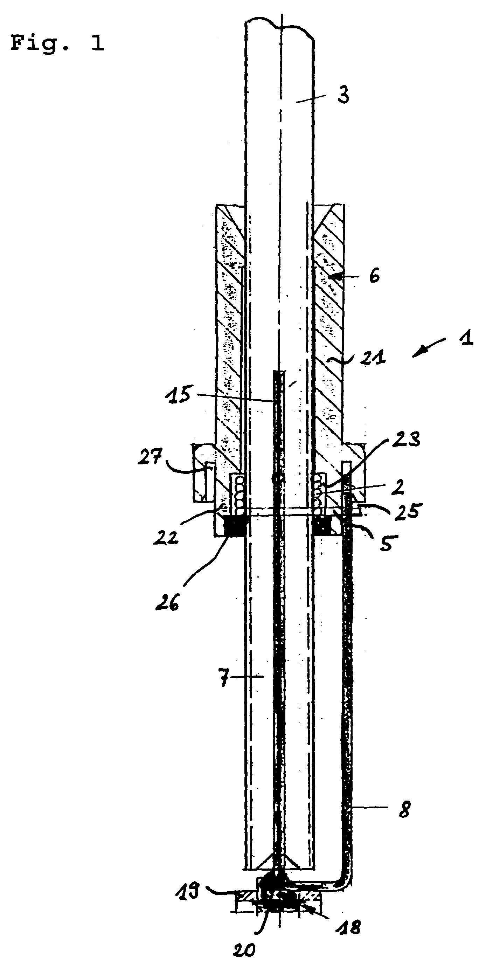

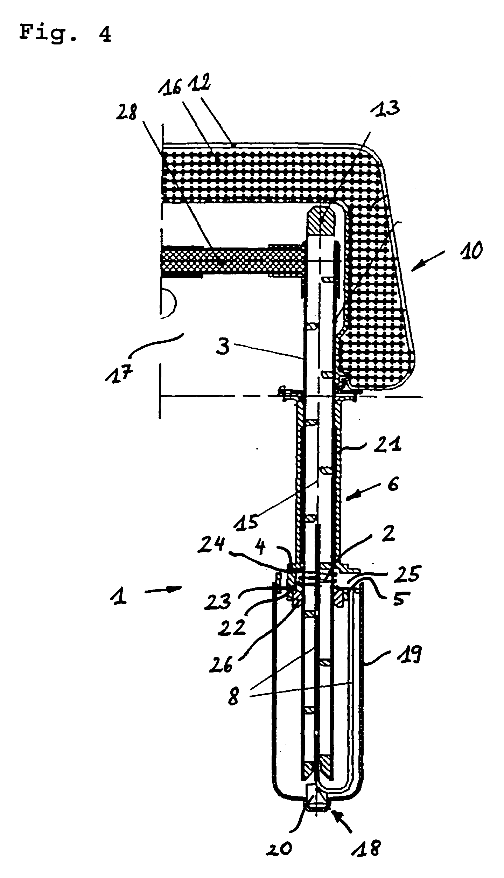

Wie zunächst Fig. 1 zeigt, weist eine erfindungsgemäße Verriegelungsvorrichtung 1 eine Schenkelfeder 2 als Verriegelungsmittel auf, in welche eine Haltestange 3 koaxial einsteckbar ist. Ein Schenkel der Schenkelfeder 2 (in Fig. 1 - nicht sichtbar, in Fig. 4 - mit dem Bezugszeichen 4 gekennzeichnet) ist gestellfest gehalten, während der zweite Schenkel 5 derart verstellbar ist, daß die Schenkelfeder 2 die kraftschlüssig von ihr umgriffene Haltestange 3 zum Zwecke der axialen Verschiebung freigibt.

Dies geschieht dadurch, daß der Windungsdurchmesser der Schenkelfeder 2 verändert werden kann, indem der verstellbare Schenkel 5 der Schenkelfeder 2 unter Krafteinwirkung gegen den Wickelsinn der Schenkelfeder 2 bewegt wird. Hierdurch weitet sich die Schenkelfeder 2 auf, und die Haltestange 3 kann linear in der sie umgreifenden Schenkelfeder 2 sowie in einer vorteilhafterweise vorhandenen Führungshülse 6, in der die Schenkelfeder 2 axialfest gehalten ist, bewegt werden.

Wenn nach einem Einstellvorgang der bewegbare Schenkel 5 der Schenkelfeder 2 unter Wegnahme der Krafteinwirkung in seine Ursprungsstellung zurückkehrt, verkleinert sich der Windungsdurchmesser der die Haltestange 3 umgreifenden Schenkelfeder 2. Da aber der Windungsdurchmesser der Schenkelfeder 2 so ausgelegt ist, daß der Innendurchmesser der Schenkelfeder 2 im entspannten Zustand kleiner als der Außendurchmesser der Haltestange 3 ist, umgreift die Schenkelfeder 2 die Haltestange 3 wieder kraftschlüssig, wodurch die Haltestange 3 verriegelt ist und nicht mehr linear verschoben werden kann.

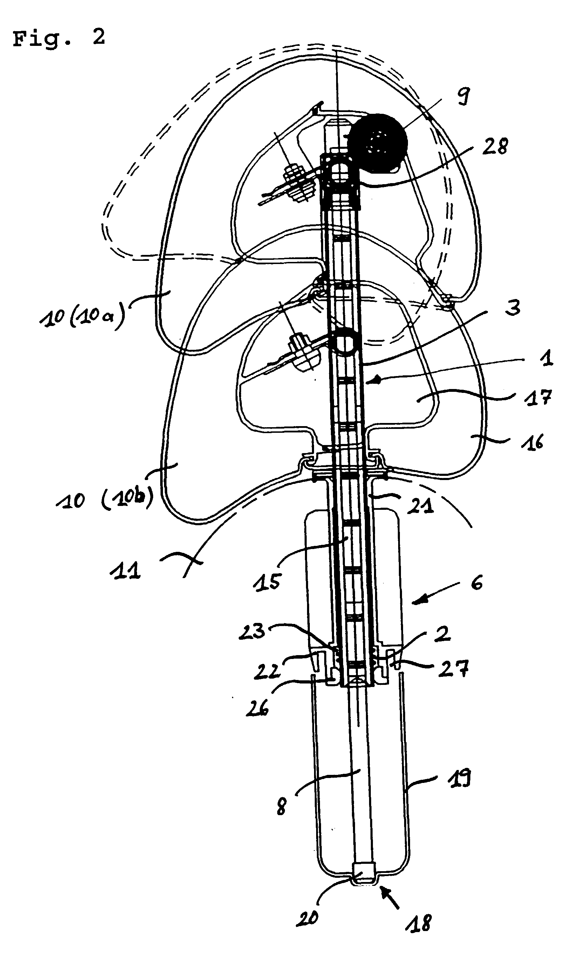

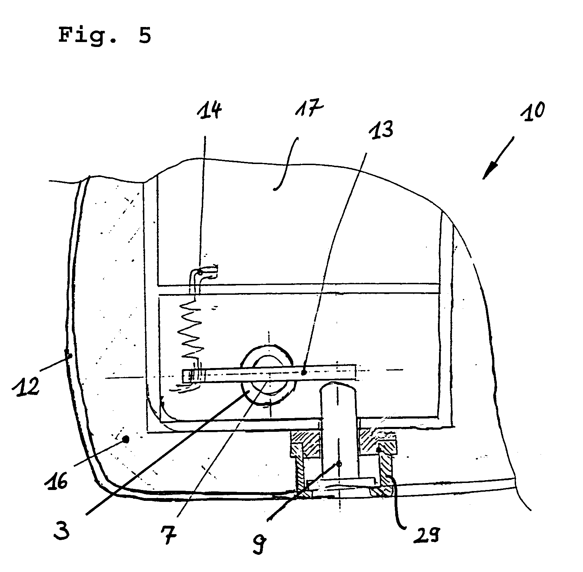

Die Haltestange 3 ist rohrförmig ausgebildet und innerhalb der rohrförmigen Haltestange 3 ist mindestens ein Übertragungsglied, in der dargestellten Ausführung zwei Übertragungsglieder 7, 8, zur Übertragung einer Stellkraft und Stellbewegung von einer Handhabe auf den verstellbaren Schenkel 5 der Schenkelfeder 2 angeordnet. Die Handhabe ist in den Fig. 2 und 5 mit dem Bezugszeichen 9 gekennzeichnet.

Eine in den Fig. 2 bis 5 dargestellte erfindungsgemäße Kopfstütze 10 für einen Kraftfahrzeugsitz ist, um jeweils bestimmte eingestellte Höhenpositionen zu fixieren, mit mindestens einer, im dargestellten Beispiel, wie insbesondere Fig. 4 verdeutlicht, mit vorzugsweise zwei, symmetrisch angeordneten erfindungsgemäßen Verriegelungsvorrichtungen 1, ausgestattet.

Wie die einzelnen Figuren zeigen, ist jeweils in der Führungshülse 6, die mit der Struktur einer Rückenlehne 11 des Kraftfahrzeugsitzes fest verbunden ist, die mit der Kopfstütze 10 verbundene Haltestange 3 geführt. Diese ist derart stufenlos verschiebbar gelagert, daß die Kopfstütze 10 in eine individuelle Höhenposition relativ zum Kopf eines Sitzbenutzers bzw. relativ zur Rückenlehne 11 eingestellt werden kann.

Fig. 2 zeigt zwei unterschiedliche Höhenpositionen der Kopfstütze 10, eine obere Höhenposition 10a und eine untere Höhenposition 10b, wobei die Stellung der Verriegelungsvorrichtung 1 (insbesondere des ersten Übertragungsgliedes 7) in ihrem unteren zeichnerisch dargestellten Bereich (im Bereich der Rückenlehne 11) nur der oberen Höhenposition 10a der Kopfstütze 10 entspricht.

Aus Fig. 2 (und Fig. 4) wird deutlich, daß zur Einleitung der Höhenverstellung der Kopfstütze 10 bzw. der dazu notwendigen Entriegelung der Verriegelungseinrichtung 1 an einer Seite der Kopfstütze 10 als Handhabe 9 eine Drucktaste vorgesehen ist. Vorteilhafterweise kann diese Drucktaste im Griffbereich der nach rückwärts greifenden Hände des Sitzbenutzers angebracht werden, so daß sie mit den Fingern ertastet werden kann. Die Drucktaste kann durch einen Polsterbezug 12 der Kopfstütze 10 verdeckt werden. Hierbei sollte die Tasterfläche der Drucktaste nur ausreichend groß dimensioniert sein, um sie sicher erfühlen zu können.

Zur Übertragung der linearen Bewegung und der Stellkraft der Handhabe 9 auf den verstellbaren Schenkel 5 der Schenkelfeder 2 dienen die beiden koaxial innerhalb der rohrförmigen Haltestange 3 angeordneten drehbeweglichen Übertragungsglieder 7, 8. Es handelt sich dabei im einzelnen um ein in Wirkverbindung mit der Handhabe 9 stehendes kopfstützenseitiges erstes Drehelement 7 und ein in Wirkverbindung mit dem verstellbaren Schenkel 5 der Schenkelfeder 2 stehendes rückenlehnenseitiges zweites Drehelement 8.

Das erste Drehelement 7 ist axialfest zur Haltestange 3, jedoch axialverschieblich zum zweiten Drehelement 8 und das zweite Drehelernent 8 ist in seiner axialen Richtung gestellfest zur Rückenlehne 11 angeordnet. Dadurch, daß das erste Drehelement 7 axialfest in der Haltestange 3 der Kopfstütze 10 gelagert ist, vollführt es die Verschiebebewegung der Haltestange 3 beim Herausziehen und Hineinschieben der Kopfstütze 10 mit. Die beiden innerhalb der rohrförmigen Haltestange 3 angeordneten Übertragungsglieder 7, 8 sind über eine lösbare Verbindung, insbesondere über eine in axialer Richtung der Haltestange 3 steckbare Verbindung, miteinander verbindbar und damit leicht zu montieren bzw. wieder voneinander zu lösen.

Das erste Drehelement 7 weist an seinem einen Ende (im Bereich der Kopfstütze 10) einen Schwenkhebel 13 auf, der fest mit dem Drehelement 7 verbunden ist. Das Drehelement 7 kann dabei mit Vorteil aus Kunststoff gefertigt sein, wobei der Schwenkhebel 13 in diesem Fall in fertigungstechnisch einfacher Weise einstückig mit dem Drehelement 7 ausgeführt sein kann. Der Schwenkhebel 13 dient der unmittelbaren Kraft- und Bewegungsübertragung von der Handhabe 9 auf das erste Drehelement 7. Wie Fig. 5 veranschaulicht, kann am Schwenkhebel 13 auch zusätzlich eine Zugfeder 14 vorgesehen sein, die die Rückbewegung des Schwenkhebels 13 und damit der Handhabe 9 in ihre jeweilige Ruhestellung unterstützt, so daß nach Wegnahme des Druckes auf die Drucktaste die Verriegelung der Kopfstütze 10 in der gewünschten Position in umgekehrter Abfolge zu der der Entriegelung erfolgt.

Weiterhin weist das rohrförmig ausgebildete erste Drehelement 7 in seinem Inneren einen entlang seiner Längsachse verlaufenden Innenkanal 15 auf, der so profiliert ist, daß er sich zur Übertragung einer Drehbewegung auf das in das Profil passende zweite Drehelement 8 eignet. Bevorzugt kommen hierbei für das zweite Drehelement 8 einfache Profile, wie Vierkant- Rechteck- oder Sechskantprofile, zur Anwendung.

Von dem profilierten Innenkanal 15 des in der Haltestange 3 drehbar gelagerten ersten Drehelements 7 wird das eine Ende des im Ausführungsbeispiel als J-förmiger Bügel ausgebildeten zweiten Drehelements 8 formschlüssig umfaßt, wobei, wie ausgeführt, die Profilierung dieses Endes des J-förmigen Übertragungselements der Profilierung des Innenkanals 15 im ersten Drehelement 7 entspricht, und so eine nahezu spielfreie Übertragung der Drehbewegung des ersten Drehelements 7 auf das zweite Drehelement 8 gewährleistet. Durch das andere Ende des J-förmigen Bügels wird die Drehbewegung auf den bewegbaren Schenkel 5 der in der Führungshülse 6 gelagerten Schenkelfeder 2 übertragen.

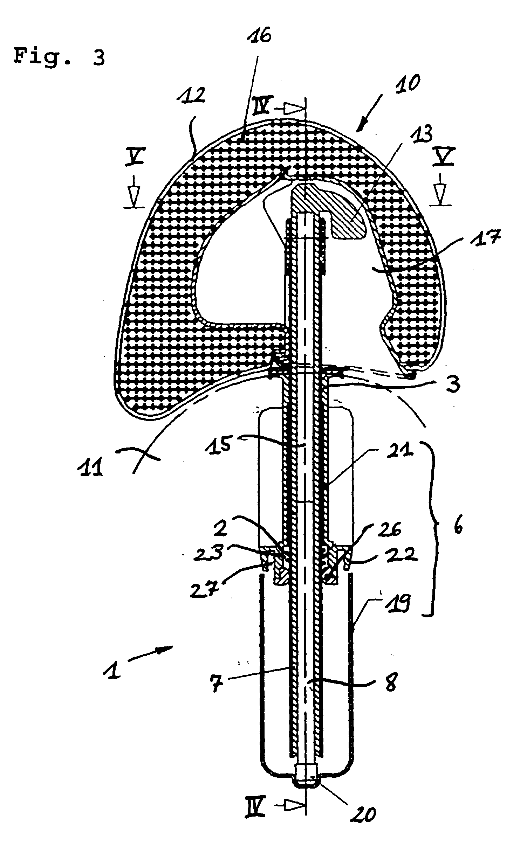

Wie Fig. 3 zeigt, ist die erfindungsgemäße Kopfstütze 10 als Hohlkörper ausgebildet. Ein gepolsterter Kopfstützenkörper 16 umschließt dabei - zumindest teilweise - einen Aufnahmeraum 17 für das obere Ende der rohrförmigen Haltestange 3. Auch das kopfstützenseitige Ende des ersten Drehelements 7 einschließlich des Schwenkhebels 13 befinden sich in diesem Aufnahmeraum 17.

Fig. 3 veranschaulicht des weiteren, daß das zweite Drehelement 8 zum einen in dem profilierten Innenkanal 15 des ersten Drehelements 7 und zum anderen rückenlehnenseitig in einem in der Verlängerung der Drehachse bzw. der Symmetrieachse der Haltestange 3 der Kopfstütze 10 angebrachten Gegenlager 18 in der Führungshülse 6 drehbar gelagert ist. Das zweite Drehelement 8 kann auf diese Weise nur die über das erste Drehelement 7 eingeleitete Drehbewegung vollführen, nicht aber eine Längsbewegung. Das Gegenlager 18 für das zweite Drehelement 8 besteht aus einem in einer Aufnahmekappe 19 der Führungshülse 6 angeordneten Zapfen 20, wobei die Aufnahmekappe 19 in einem Hohlraum der Rückenlehne 11 angeordnet ist.

Die fest mit der Rückenlehne 11 verbundene Führungshülse 6 für die Haltestange 3 umfaßt somit mehrere Abschnitte bzw. Teile: einen oberen Gleitlagerabschnitt 21 für die Haltestange 3, einen Ringabschnitt bzw. ein Ringteil 22 zur Fixierung der Schenkelfeder 2 in einem inneren Ringraum 23, wobei das Ringteil 22 einerseits eine Aufnahme 24 zur gestellfesten Halterung des ersten Schenkels 4 und andererseits eine radial gerichtete Führungsöffnung 25 für die Verstellbewegung des zweiten Schenkels 5 der Schenkelfeder 2 aufweist, ein Verschlußteil 26 zum (unteren) rückenlehnenseitigen Verschluß des inneren Ringraumes 23 und die Aufnahmekappe 19 mit dem Gegenlager 18 für das zweite Drehelement 8. Das Ringteil 22 besitzt zudem in der dargestellten Ausführung einen äußeren Ringraum 27, der zur Führung des Endes des J-förmigen Bügels dient, der auf den verstellbaren Schenkel 5 der Schenkelfeder 2 wirkt.

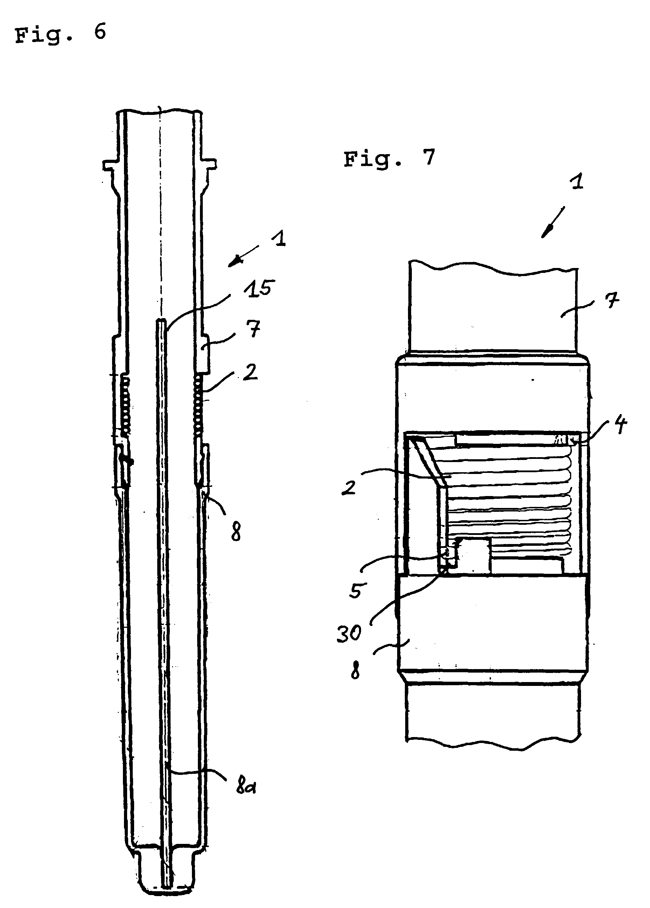

Die zweite, in den Fig. 6 und 7 dargestellte Ausführung einer erfindungsgemäßen Verriegelungsvorrichtung 1 zeigt, daß das zweite Drehelement 8 beispielsweise nicht zwangsläufig aus einem J-förmig ausgebildeten Bügel bestehen muß, sondern es kann auch durch eine Drehkappe, d.h. durch einen topfartigen Rotationskörper, gebildet sein, der in seiner Rotationsachse einen in den profilierten Innenkanal 15 des ersten Drehelements 7 hineinragenden Zapfen 8a zur Drehmomentenübertragung aufweist. Zur Übertragung der Drehbewegung auf den beweglichen Schenkel 5 der Schenkelfeder 2 kann, wie Fig. 7 zeigt, ein solcher Rotationskörper an seinem Topfrand geeignete Einraststellen 30 für den beweglichen Schenkel 5 der Schenkelfeder 2 aufweisen. Eine solche Ausführung zeichnet sich vorteilhafterweise durch eine sehr kompakte und montagefreundliche Bauweise aus.

Die Erfindung ist nicht auf die dargestellten Ausführungsbeispiele beschränkt, sondern umfaßt auch alle im Sinne der Erfindung gleichwirkenden Ausführungen. So muß es sich bei dem (den) durch die Haltestange 3 geführten Übertragungselement(en) nicht - wie dargestellt - um ein bzw. zwei Drehelemente 7, 8 handeln, sondern das Übertragungselement könnte auch durch einen mechanischen Zug oder eine äquivalent wirkende hydraulisch wirkende Einrichtung gebildet sein.

Des weiteren kann der Fachmann ergänzend vorteilhafte Maßnahmen vorsehen, ohne daß der Rahmen der Erfindung verlassen wird. Wie Fig. 2 zeigt, kann z.B. bei einer erfindungsgemäßen Kopfstütze 10 zwischen den Haltestangen 3 der beiden Verriegelungsvorrichtungen 1 eine Querstange oder ein Querrohr 28 befestigt sein, das eine Schwenkachse für den Kopfstützenkörper 16 bildet. So ist die erfindungsgemäße Kopfstütze vorteilhafterweise auch individuell relativ zum Kopf eines Sitzbenutzers bzw. relativ zur Rückenlehne 11 neigungsverstellbar. Wie Fig. 5 zeigt, kann die Handhabe 9 auch mit Vorteil innerhalb eines im Kopfstützenkörper 16 befestigten Gehäuses 29 angeordnet sein.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Verriegelungsvorrichtung
- 2: Schenkelfeder
- 3: Haltestange
- 4: fester Schenkel von 2
- 5: verstellbarer Schenkel von 2
- 6: Führungshülse
- 7: Übertragungsglied, erstes Drehelement
- 8: Übertragungsglied, zweites Drehelement
- 8a: Zapfen
- 9: Handhabe
- 10: Kopfstütze
- 10a: obere Höhenposition von 10
- 10a: untere Höhenposition von 10
- 11: Rückenlehne
- 12: Polsterbezug
- 13: Schwenkhebel an 7
- 14: Zugfeder
- 15: Innenkanal in 7
- 16: Kopfstützenkörper von 10
- 17: Aufnahmeraum von 10
- 18: Gegenlager in 19
- 19: Aufnahmekappe von 6
- 20: Zapfen an 8
- 21: Gleitlagerabschnitt von 6
- 22: Ringteil von 6
- 23: innerer Ringraum von 22
- 24: Aufnahme für 4 in 22
- 25: Führungsöffnung für 5 in 22
- 26: Verschlußteil von 6 für 23
- 27: äußerer Ringraum von 22
- 28: Querrohr
- 29: Gehäuse für 9
- 30: Rastöffnung

## Patentansprüche

1. Verriegelungsvorrichtung, insbesondere zur höhenverstellbaren Befestigung einer Kopfstütze (10) an der Rückenlehne (11) eines Kraftfahrzeugsitzes, mit einer über eine Handhabe (9) betätigbaren Schenkelfeder (2) als Verriegelungsmittel, in welche eine Haltestange (3) koaxial einsteckbar ist, wobei ein Schenkel (4) der Schenkelfeder (2) gestellfest gehalten und der zweite Schenkel (5) mittels der Handhabe (9) derart verstellbar ist, daß die Schenkelfeder (2) die kraftschlüssig von ihr umgriffene Haltestange (3) zum Zwecke der axialen Verschiebung freigibt,
**dadurch gekennzeichnet**, daß die Haltestange (3) rohrförmig ausgebildet ist, wobei innerhalb der rohrförmigen Haltestange (3) mindestens ein Übertragungsglied (7, 8) zur Übertragung einer Stellkraft und Stellbewegung von der Handhabe (9) auf den verstellbaren Schenkel (5) der Schenkelfeder (2) angeordnet ist.

2. Verriegelungsvorrichtung nach Anspruch 1,
**dadurch gekennzeichnet**, daß die Handhabe (9) durch eine in einem seitlichen oder rückwärtigen Bereich der Kopfstütze (10) angeordnete Drucktaste gebildet ist.

3. Verriegelungsvorrichtung nach Anspruch 1 oder 2,
**dadurch gekennzeichnet,** daß die Kopfstütze (10) als Hohlkörper ausgebildet ist, wobei ein Kopfstützenkörper (16) einen Aufnahmeraum (17) für ein Ende der rohrförmigen Haltestange (3), zumindest teilweise, umschließt.

4. Verriegelungsvorrichtung nach einem der Ansprüche 1 bis 3,
**dadurch gekennzeichnet**, daß zur Übertragung der Stellkraft und Stellbewegung von der Handhabe (9) auf den verstellbaren Schenkel (5) der Schenkelfeder (2) innerhalb der rohrförmigen Haltestange (3), koaxial zur Haltestange (3) zwei gegenüber der Haltestange (3) drehbewegliche Übertragungsglieder angeordnet (7, 8) sind, und zwar ein in Wirkverbindung mit der Handhabe (9) stehendes kopfstützenseitiges erstes Drehelement (7) und ein in Wirkverbindung mit dem verstellbaren Schenkel (5) der Schenkelfeder (2) stehendes rückenlehnenseitiges zweites Drehelement (8).

5. Verriegelungsvorrichtung nach Anspruch 4,
**dadurch gekennzeichnet**, daß das erste Drehelement (7) axialfest zur Haltestange (3), jedoch axialverschieblich zum zweiten Drehelement (8) und das zweite Drehelement (8) in seiner axialen Richtung gestellfest zur Rückenlehne (11) angeordnet sind.

6. Verriegelungsvorrichtung nach Anspruch 4 oder 5,
**dadurch gekennzeichnet**, daß die beiden innerhalb der rohrförmigen Haltestange (3) angeordneten Übertragungsglieder (7, 8) über eine lösbare Verbindung, insbesondere über eine in axialer Richtung der Haltestange (3) steckbare Verbindung, miteinander verbindbar sind.

7. Verriegelungsvorrichtung nach Anspruch 5 oder 6,
**dadurch gekennzeichnet**, daß zur gegenseitigen axialen Führung und/oder Bildung der lösbaren Verbindung, das erste Drehelement (7) einen profilierten axial verlaufenden Innenkanal (15) und das zweite Drehelement (8) ein an den Querschnitt dieses Innenkanals (15) angepaßtes Querschnittsprofil, insbesondere ein Vierkant- oder ein Sechskantprofil, aufweisen.

8. Verriegelungsvorrichtung nach einem der Ansprüche 1 bis 7,
**dadurch gekennzeichnet**, daß die Haltestange (3) rückenlehnenseitig in einer fest mit der Rückenlehne (11) verbundenen Führungshülse (6) geführt ist.

9. Verriegelungsvorrichtung nach einem der Ansprüche 4 bis 8,
**dadurch gekennzeichnet**, daß das erste Drehelement (7) über einen an seinem kopfstützenseitigen Ende drehtest angeordneten, insbesondere durch eine Zugfeder (14) belasteten, Schwenkhebel (13) in Wirkverbindung mit der Handhabe (9) steht.

10. Verriegelungsvorrichtung nach einem der Ansprüche 4 bis 9,
**dadurch gekennzeichnet**, daß das zweite Drehelement (8) an seinem rückenlehnenseitigen Ende drehbar, insbesondere über einen in einer Aufnahmekappe (19) für das zweite Drehelement (8) angeordneten Zapfen (20), gelagert ist, wobei die Aufnahmekappe (19) in einem Hohlraum der Rückenlehne (11) angeordnet ist.

11. Verriegelungsvorrichtung nach einem der Ansprüche 3 bis 10,
**dadurch gekennzeichnet**, daß die Handhabe (9) innerhalb eines im Kopfstützenkörper (16) befestigten Gehäuses (29) angeordnet ist.

12. Verriegelungsvorrichtung nach einem der Ansprüche 4 bis 11,
**dadurch gekennzeichnet**, daß das zweite Drehelement (8) als ein in seiner Grundgestalt J-förmiger Bügel ausgebildet ist, der einendig mit dem ersten Drehelement (7) verbunden ist und anderendig in Wirkverbindung mit dem verstellbaren Schenkel (5) der Schenkelfeder (2) steht.

13. Verriegelungsvorrichtung nach einem der Ansprüche 1 bis 12,
**dadurch gekennzeichnet**, daß die Schenkelfeder (2) in einem, insbesondere mittels eines Verschlußteiles (26) gegenüber dem rückenlehnenseitigen Ende der Schenkelfeder (2) verschließbaren, insbesondere der Führungshülse zugehörigen, Ringteil (22) angeordnet ist, das einerseits eine Aufnahme (24) zur gestellfesten Halterung des ersten Schenkels (4) und andererseits eine Führungsöffnung (25) für die Verstellbewegung des zweiten Schenkels (5) der Schenkelfeder (2) aufweist.

14. Verriegelungsvorrichtung nach einem der Ansprüche 4 bis 11,
**dadurch gekennzeichnet**, daß das zweite Drehelement (8) durch einen topfartigen Rotationskörper gebildet ist, der in seiner Rotationsachse einen in den profilierten Innenkanal (15) des ersten Drehelements (7) hineinragenden Zapfen (8a) zur Drehmomentenübertragung und an seinem Topfrand Einraststellen (30) für den beweglichen Schenkel (5) der Schenkelfeder (2) aufweist.

15. Kopfstütze, insbesondere an der Rückenlehne (11) eines Kraftfahrzeugsitzes,
**gekennzeichnet durch** mindestens eine Verriegelungsvorrichtung (1) nach einem der Ansprüche 1 bis 14.

16. Kopfstütze nach Anspruch 15,
**gekennzeichnet durch** zwei Verriegelungsvorrichtungen (1) nach einem der Ansprüche 1 bis 13, insbesondere in symmetrischer Anordnung.

17. Kopfstütze nach Anspruch 16,
**dadurch gekennzeichnet**, daß zwischen den Haltestangen (3) der beiden Verriegelungsvorrichtungen (1) eine Querstange oder ein Querrohr (28) befestigt ist, das eine Schwenkachse für den Kopfstützenkörper (16) bildet.
